# EUROPÄISCHE PATENTSCHRIFT

(11) **EP 2 929 167 B1**
(45) Veröffentlichungstag und Bekanntmachung des Hinweises auf die Patenterteilung: **26.10.2016**
(21) Anmeldenummer: 13810912.9
(22) Anmeldetag: 06.12.2013
(51) Int. Cl.: F02D 35/02, F02D 41/00, F02D 41/24, F02D 41/28

(54) **VERFAHREN ZUR BESTIMMUNG EINER ZYLINDERDRUCK-KURBELWELLENPOSITIONS-ZUORDNUNG FÜR EINE BRENNKRAFTMASCHINE**
METHOD FOR DETERMINING A CYLINDER PRESSURE-CRANKSHAFT POSITION ASSIGNMENT FOR AN INTERNAL COMBUSTION ENGINE
PROCÉDÉ PERMETTANT DE DÉTERMINER UNE ASSOCIATION ENTRE PRESSION DU CYLINDRE ET POSITION DU VILEBREQUIN DANS UN MOTEUR À COMBUSTION INTERNE

(30) Priorität: 06.12.2012 DE 102012023834
(43) Veröffentlichungstag der Anmeldung: 14.10.2015
(73) Patentinhaber: MAN Diesel & Turbo SE, 86153 Augsburg (DE)
(72) Erfinder: KNAFL, Alexander, 86153 Augsburg (DE); HENSCHEN, Philipp, 86438 Kissing (DE); HAGL, Paul, 86152 Augsburg (DE); GRUBER, Heidi, 80997 München (DE); BAUER, Markus, 86153 Augsburg (DE)
(86) Internationale Anmeldenummer: PCT/EP2013/075811
(87) Internationale Veröffentlichungsnummer: WO 2014/086980

(56) Entgegenhaltungen:
- EP-A2- 1 936 157
- US-A1- 2002 087 256
- US-A1- 2008 229 814
- KOUREMENOS D A ET AL: "Phasing cylinder pressure to crank angle in a direct injection diesel engine, by simulation of compression curve and elaboration of measured pressure data", FORSCHUNG IM INGENIEURWESEN: ENGINEERING RESEARCH, SPRINGER-VERLAG, BERLIN, DE, Bd. 57, Nr. 3, 1. Mai 1991 (1991-05-01), Seiten 87-95, XP008113042, ISSN: 0015-7899, DOI: 10.1007/BF02561172

## Beschreibung

Die Erfindung betrifft ein Verfahren zur Bestimmung einer Zylinderdruck-Kurbelwellenpositions-Zuordnung für eine Brennkraftmaschine.

Zur Steuerung des Betriebs einer Brennkraftmaschine ist es von Vorteil, eine exakte zeitliche Zuordnung des Zylinderdrucks zur Kurbelwellenposition bzw. zum Kurbelwellenwinkel zu kennen. Bislang bereitet es Schwierigkeiten, eine solche Zylinderdruck-Kurbelwellenpositions-Zuordnung zu bestimmen.

Der nächstliegende Stand der Technik wird in Dokument US 2002/087256 A1 beschrieben.

Hievon ausgehend liegt der Erfindung die Aufgabe zu Grunde, ein neuartiges Verfahren zur Bestimmung einer Zylinderdruck-Kurbelwellenpositions-Zuordnung für eine Brennkraftmaschine zu schaffen.

Diese Aufgabe wird durch ein Verfahren zur Bestimmung einer Zylinderdruck-Kurbelwellenpositions-Zuordnung für eine Brennkraftmaschine gemäß Anspruch 1 gelöst.

Das Verfahren umfasst: messtechnisches Erfassen des Kurbelwellenwinkels; messtechnisches Erfassen des Zylinderdrucks; Berechnen eines Zylindervolumens abhängig vom Kurbelwellenwinkel; Ermittlung eines Kurvenverlaufs für den logarithmischen Zylinderdruck über dem logarithmischen Zylindervolumen in Abhängigkeit vom Kurbelwellenwinkel; Analysieren des Kurvenverlaufs und Ermittlung eines Offsetwerts für den Kurbelwellenwinkel zur Bestimmung einer zeitlich exakten Zylinderdruck-Kurbelwellenpositions-Zuordnung.

Das erfindungsgemäße Verfahren erlaubt eine automatische Bestimmung der Zylinderdruck-Kurbelwellenpositions-Zuordnung für Zylinder einer Brennkraftmaschine mit einfachen Mitteln und hoher Genauigkeit. Das erfindungsgemäße Verfahren ist automatisch bei Brennkraftmaschinen durchführbar, und zwar sowohl bei im befeuerten Betrieb als auch bei im nicht befeuerten, geschleppten Betrieb einer Brennkraftmaschine. Erfindungsgemäß werden der Kurbelwellenwinkel und der Zylinderdruck messtechnisch erfasst. Aus dem Kurbelwellenwinkel wird das Zylindervolumen berechnet, wobei aus dem errechneten Zylindervolumen, dem gemessenen Kurbelwellenwinkel und dem gemessenen Zylinderdruck ein Kurvenverlauf für den logarithmischen Zylinderdruck über dem logarithmischen Zylindervolumen in Abhängigkeit vom Kurbelwellenwinkel ermittelt wird. Dieser Kurvenverlauf wird analysiert und abhängig von der Analyse ein Offsetwert für den Kurbelwellenwinkel zur Bestimmung der zeitlich exakten Zylinderdruck-Kurbelwellenpositions-Zuordnung ermittelt.

Der Kurvenverlauf wird im Bereich eines Zylinderumkehrpunkts zur Ermittlung des Offsetwerts analysiert. Dabei kann der Kurvenverlauf im Bereich eines unteren Zylinderumkehrpunkts oder im Bereich eines oberen Zylinderumkehrpunkts zur Ermittlung des Offsetwerts analysiert werden. Die Analyse des Kurvenverlaufs im Bereich des Zylinderumkehrpunkts ist besonders vorteilhaft.

Dann, wenn im Bereich des Zylinderumkehrpunkts ein sich schneidender Verlauf von Kurvensegmenten des Kurvenverlaufs ermittelt wird, wird auf ein nach spät verschobenes Zylinderdrucksignal im Verhältnis zum Kurbelwellenwinkelsignal geschlossen und ein Offsetwert zur Kompensation dieser Verschiebung abhängig von der Fläche zwischen den Kurvensegmenten des Kurvenverlaufs im Bereich des Zylinderumkehrpunkts ermittelt. Vorzugsweise kann hingegen dann, wenn im Bereich des Zylinderumkehrpunkts ein sich nicht schneidender Verlauf von Kurvensegmenten des Kurvenverlaufs ermittelt wird, auf ein nach früh verschobenes Zyljnderdrucksignal im Verhältnis zum Kurbelwellenwinkelsignal geschlossen werden und ein Offsetwert zur Kompensation dieser Verschiebung abhängig von der Fläche zwischen den Kurvensegmenten im Bereich des Zylinderumkehrpunkts ermittelt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen Kurvenverlauf zur Ermittlung eines Offsetwerts für den Kurbelwellenwinkel zur Bestimmung einer zeitlich exakten Zylinderdruck-Kurbelwellenpositions-Zuordnung, und
- Fig. 2a bis 2c:: alternative Details des Kurvenverlaufs der Fig. 1.

Die vorliegende Erfindung betrifft ein Verfahren zur automatischen Bestimmung einer Zylinderdruck-Kurbelwellenpositions-Zuordnung für die Zylinder einer Brennkraftmaschine. Das erfindungsgemäße Verfahren ist sowohl im befeuerten Betrieb einer Brennkraftmaschine als auch nicht befeuerten, geschleppten Betrieb einer Brennkraftmaschine automatisch durchführbar.

Zur automatischen Durchführung des erfindungsgemäßen Verfahrens wird beispielsweise mit Hilfe eines Drehgebers ein Kurbelwellenwinkel fortlaufend messtechnisch erfasst. Ferner wird mit Hilfe eines Drucksensors der Zylinderdruck automatisch erfasst, insbesondere abhängig vom Kurbelwellenwinkel. Aus dem messtechnisch erfassten Kurbelwellenwinkel wird das Zylindervolumen des jeweiligen Zylinders der Brennkraftmaschine bestimmt.

Aus dem messtechnisch erfassten Zylinderdruck und aus dem aus dem messtechnisch erfassten Kurbelwellenwinkel berechneten Zylindervolumen wird ein Kurvenverlauf für den logarithmischen Zylinderdruck über dem logarithmischen Zylindervolumen in Abhängigkeit vom Kurbelwellenwinkel ermittelt.

Dieser Kurvenverlauf wird analysiert, wobei aus dem Kurvenverlauf ein Offsetwert für den Kurbelwellenwinkel zur Bestimmung der zeitlich exakten Zylinderdruck-Kurbelwellenpositions-Zuordnung ermittelt wird.

Die obigen Schritte des erfindungsgemäßen Verfahrens laufen vollautomatisch ab, wobei die Messwerte des Kurbelwellenwinkels und des Zylinderdrucks von den entsprechenden Sensoren einer Motorsteuerungseinrichtung bereitgestellt werden, die dann das Zylindervolumen berechnet und den Kurvenverlauf bestimmt und den Kurvenverlauf zur Ermittlung des Offsetwerts automatisch analysiert.

Die Analyse des Kurvenverlaufs, nämlich des Kurvenverlaufs des logarithmischen Zylinderdrucks über dem logarithmischen Zylindervolumen in Abhängigkeit vom Kurbelwellenwinkel, erfolgt vorzugsweise im Bereich eines Zylinderumkehrpunkts, nämlich entweder im Bereich des unteren Zylinderumkehrpunkts bzw. unteren Totpunkts oder im Bereich des oberen Zylinderumkehrpunkts bzw. oberen Totpunkts einer Zylinderkolbenbewegung des jeweiligen Zylinders der Brennkraftmaschine.

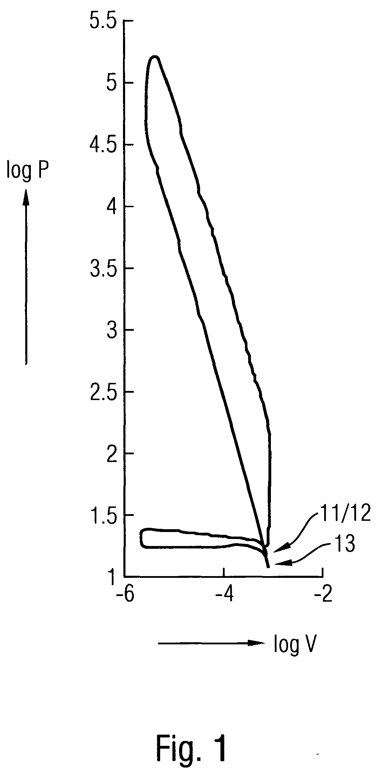

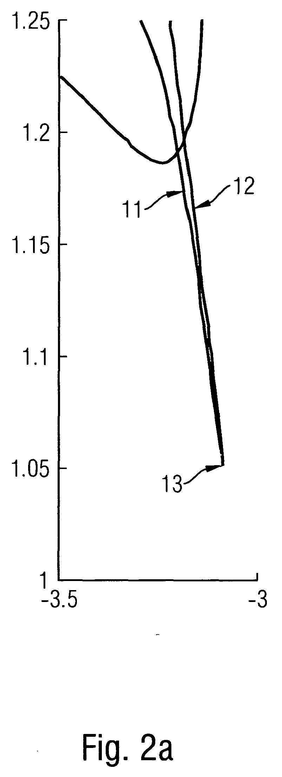

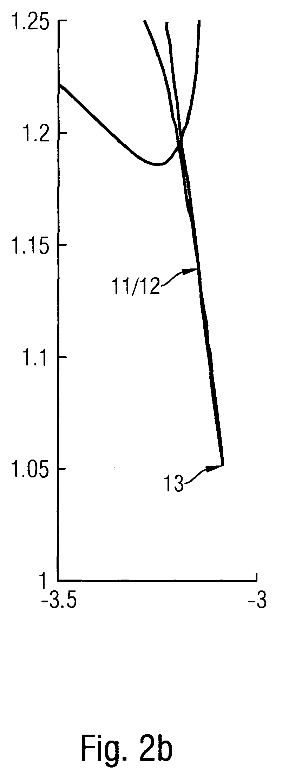

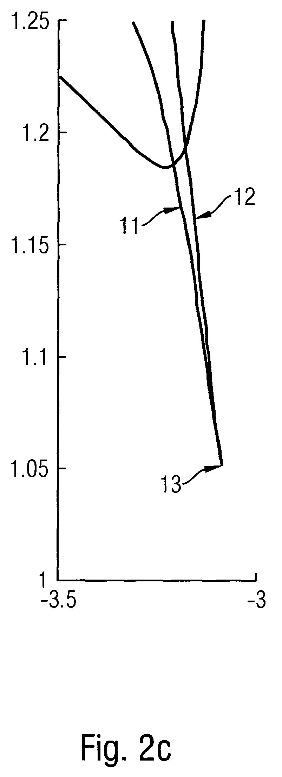

Figur 1 zeigt stark schematisiert einen bei der automatischen Durchführung des Verfahrens ermittelten Kurvenverlauf für den logarithmischen Zylinderdruck log p über dem logarithmischen Zylindervolumen log V in Abhängigkeit vom Kurbelwellenwinkel, wobei in Figur 1 der logarithmische Zylinderdruck log p über dem logarithmischen Zylindervolumen log V für zwei volle Umdrehungen der Kurbelwelle aufgetragen ist, also über 720° des Kurbelwellenwinkels. Das Diagramm der Figur 1 umfasst demnach den Verbrennungsvorgang und einen Ladungswechsel im jeweiligen Zylinder der Brennkraftmaschine. Figuren 2a, 2b und 2c zeigen unterschiedliche, alternative Details des Diagramms der Figur 1 im Bereich des unteren Umkehrpunkts bzw. unteren Totpunkts der Zylinderkolbenbewegung des jeweiligen Zylinders.

Im Bereich des unteren Umkehrpunkts bzw. unteren Totpunkts der Zylinderkolbenbewegung des jeweiligen Zylinder ist der Kurvenverlauf der Figur 1 bzw. der Figuren 2a, 2b bzw. 2c durch spitz zusammenlaufende Kurvensegmente 11 und 12 gekennzeichnet, die an einem Punkt 13 spitz zusammenlaufen, der einen Wendepunkt im entsprechenden Kurvenverlauf darstellt.

Erfindungsgemäß wird nun der Kurvenverlauf im Bereich dieses Umkehrpunkts 13 analysiert, nämlich derart, dass dann, wenn im Bereich des Zylinderumkehrpunkts 13 ein sich schneidender Kurvenverlauf der Kurvensegmente 11 und 12 ermittelt wird (siehe Fig. 2b) auf ein nach spät verschobenes Zylinderdrucksignal im Verhältnis zum Kurbelwellenwinkelsignal geschlossen wird, hingegen dann, wenn im Bereich des Zylinderumkehrpunkts 13 ein sich nicht schneidender Kurvenverlauf der Kurvensegmente 11 und 12 ermittelt wird (siehe Figur 2c), auf ein nach früh verschobenes Zylinderdrucksignal im Verhältnis zum Kurbelwellenwinkelsignal geschlossen wird.

Ferner wird eine Fläche zwischen den Kurvensegmenten 11 und 12 des Kurvenverlaufs im Bereich des Umkehrpunkts 13 ermittelt, wobei abhängig von der Fläche der Offsetwert zur Kompensation der festgestellten zeitlichen Verschiebung zwischen dem Zylinderdrucksignal und dem Kurbelwellenwinkelsignal ermittelt wird. Je größer diese Fläche ist, desto größer fällt der Offsetwert aus. Vorzugsweise wird der Offsetwert derart iterativ ermittelt, dass die Fläche zwischen den Kurvensegmenten 11 und 12 des Kurvenverlaufs im Bereich des Zylinderumkehrpunkts minimal ist. Dies ist zum Beispiel im Diagramm der Figur 2a der Fall.

Das gesamte Verfahren kann kontinuierlich und automatisch während des befeuerten oder geschleppten Betriebs einer Brennkraftmaschine durchgeführt werden. So kann vollautomatisch im Betrieb eine exakte zeitliche Zuordnung des Zylinderdrucks zum Kurbelwellenwinkel ermittelt werden, um abhängig hiervon den Betrieb der Brennkraftmaschine zu steuern oder zu regeln.

## Patentansprüche

1. Verfahren zur Bestimmung einer Zylinderdruck-Kurbelwellenpositions-Zuordnung für eine Brennkraftmaschine, mit folgenden Schritten:
messtechnisches Erfassen des Kurbelwellenwinkels;
messtechnisches Erfassen des Zylinderdrucks;
Berechnen eines Zylindervolumens abhängig vom Kurbelwellenwinkel;
Ermittlung eines Kurvenverlaufs für den logarithmischen Zylinderdruck über dem logarithmischen Zylindervolumen in Abhängigkeit vom Kurbelwellenwinkel;
Analysieren des Kurvenverlaufs und Ermittlung eines Offsetwerts für den Kurbelwellenwinkel zur Bestimmung einer zeitlich exakten Zylinderdruck-Kurbelwellenpositions-Zuordnung,
wobei der Kurvenverlauf im Bereich eines Zylinderumkehrpunkts zur Ermittlung des Offsetwerts analysiert wird,
**dadurch gekennzeichnet, dass** dann, wenn im Bereich des Zylinderumkehrpunkts ein sich schneidender Verlauf von Kurvensegmenten des Kurvenverlaufs ermittelt wird, auf ein nach spät verschobenes Zylinderdrucksignal im Verhältnis zum Kurbelwellenwinkelsignal geschlossen und ein Offsetwert zur Kompensation dieser Verschiebung abhängig von der Fläche zwischen den Kurvensegmenten im Bereich des Zylinderumkehrpunkts ermittelt wird.

2. Verfahren nach Anspruch 1, **dadurch gekennzeichnet, dass** die Bestimmung der Zylinderdruck-Kurbelwellenpositions-Zuordnung für die Brennkraftmaschine im befeuerten Betrieb der Brennkraftmaschine automatisch erfolgt.

3. Verfahren nach Anspruch 1, **dadurch gekennzeichnet, dass** die Bestimmung der Zylinderdruck-Kurbelwellenpositions-Zuordnung für die Brennkraftmaschine im geschleppten Betrieb der Brennkraftmaschine automatisch erfolgt.

4. Verfahren nach Anspruch 1, **dadurch gekennzeichnet, dass** der Kurvenverlauf im Bereich eines unteren Zylinderumkehrpunkts zur Ermittlung des Offsetwerts analysiert wird.

5. Verfahren nach Anspruch 1, **dadurch gekennzeichnet, dass** der Kurvenverlauf im Bereich eines oberen Zylinderumkehrpunkts zur Ermittlung des Offsetwerts analysiert wird.

6. Verfahren nach einem der Ansprüche 1 bis 5, **dadurch gekennzeichnet, dass** dann, wenn im Bereich des Zylinderumkehrpunkts ein sich nicht schneidender Verlauf von Kurvensegmenten des Kurvenverlaufs ermittelt wird, auf ein nach früh verschobenes Zylinderdrucksignal im Verhältnis zum Kurbelwellenwinkelsignal geschlossen und ein Offsetwert zur Kompensation dieser Verschiebung abhängig von der Fläche zwischen den Kurvensegmenten im Bereich des Zylinderumkehrpunkts ermittelt wird.

## Claims

1. A method for determining a cylinder pressure-crankshaft position allocation for an internal combustion engine with the following steps:
detecting the crankshaft angle by measurement;
detecting the cylinder pressure by measurement;
calculating a cylinder volume dependent on the crankshaft angle;
determining a curve profile for the logarithmic cylinder pressure over the logarithmic cylinder volume as a function of the crankshaft angle;
analysing the curve profile and determining an offset value for the crankshaft angle for determining an exactly timed cylinder pressure-crankshaft position allocation,
wherein the curve profile in the region of a cylinder reversal point is analysed for determining the offset value,
**characterized in that** in particular when in the region of the cylinder reversal point an intersecting profile of curve segments of the curve profile is determined, a cylinder pressure signal that is shifted towards retarded is deduced in the ratio to the crankshaft angle signal and an offset value for compensating this shift is determined dependent on the area between the curve segments in the region of the cylinder reversal point.

2. The method according to claim 1, **characterized in that** determining the cylinder pressure-crankshaft position allocation for the internal combustion engine in the fired operation of the internal combustion engine takes place automatically.

3. The method according to claim 1, **characterized in that** determining the cylinder pressure-crankshaft position allocation for the internal combustion engine in drag mode of the internal combustion engine takes place automatically.

4. The method according to claim 1, **characterized in that** the curve profile in the region of a lower cylinder reversal point is analysed for determining the offset value.

5. The method according to claim 1, **characterized in that** the curve profile in the region of an upper cylinder reversal point is analysed for determining the offset value.

6. The method according to any one of the claims 1 to 5, **characterized in that** in particular when in the region of the cylinder reversal point a non-intersecting segments of the curve profile is determined, a cylinder pressure signal that is shifted towards advanced is deduced in the ratio to the crankshaft angle signal and an offset value for offsetting this shift is determined dependent on the area between the curve segments in the region of the cylinder reversal point.

## Revendications

1. Procédé de détermination d'une affectation de position de vilebrequin-pression de cylindre pour un moteur à combustion interne comportant les étapes suivantes consistant à :
déterminer par technique de mesure l'angle de vilebrequin ;
déterminer par technique de mesure la pression de cylindre ;
calculer un volume de cylindre en fonction de l'angle de vilebrequin ;
déterminer une courbe pour la pression de cylindre logarithmique par l'intermédiaire du volume de cylindre logarithmique en fonction de l'angle de vilebrequin ;
analyser la courbe et déterminer une valeur de décalage pour l'angle de vilebrequin pour déterminer une affectation de position de vilebrequin- pression de cylindre temporellement exacte,
dans lequel la courbe est analysée au niveau d'un point d'inversion de cylindre pour déterminer la valeur de décalage,
**caractérisé en ce que** ensuite, lorsque dans la zone du point d'inversion de cylindre un cours en intersection des segments de courbe de la courbe est déterminé, il est conclu à un signal de pression de cylindre décalé ultérieurement par rapport au signal d'angle de vilebrequin et une valeur de décalage pour la compensation de ce décalage est déterminée en fonction de la surface entre les segments de courbe au niveau du point d'inversion de cylindre.

2. Procédé selon la revendication 1, **caractérisé en ce que** la détermination de l'affectation de position de vilebrequin- pression de cylindre pour le moteur à combustion interne a lieu automatiquement en fonctionnement allumé du moteur à combustion interne.

3. Procédé selon la revendication 1, **caractérisé en ce que** la détermination de l'affectation de position de vilebrequin- pression de cylindre pour le moteur à combustion interne a lieu automatiquement en fonctionnement remorqué du moteur à combustion interne.

4. Procédé selon la revendication 1, **caractérisé en ce que** la courbe est analysée au niveau d'un point d'inversion de cylindre inférieur pour déterminer la valeur de décalage.

5. Procédé selon la revendication 1, **caractérisé en ce que** la courbe est analysée au niveau d'un point d'inversion de cylindre supérieur pour déterminer la valeur de décalage.

6. Procédé selon une des revendications 1 à 5, **caractérisé en ce que** ensuite, lorsque dans la zone du point d'inversion de cylindre un cours n'étant pas en intersection des segments de courbe de la courbe est déterminé, il est conclu à un signal de pression de cylindre décalé postérieurement par rapport au signal d'angle de vilebrequin et une valeur de décalage pour la compensation de ce décalage est déterminée en fonction de la surface entre les segments de courbe au niveau du point d'inversion de cylindre.
